# EUROPÄISCHE PATENTANMELDUNG

(11) **EP 1 574 317 A2**
(43) Veröffentlichungstag der Anmeldung: **14.09.2005**
(21) Anmeldenummer: 05100860.5
(22) Anmeldetag: 08.02.2005
(51) Int. Cl.: B29C 47/20

(54) **Vorrichtung zum Extrudieren von Kunststoffprofilen**

(30) Priorität: 11.03.2004 DE 102004012322
(71) Anmelder: Cincinnati Extrusion GmbH, 1239 Wien (AT)
(72) Erfinder: Stritzl, Heinrich, 3164 Rohrbach (AT); Völkl, Alfred, 3108 St. Pölten-Wangen (AT)
(74) Vertreter: Gosdin, Michael

(57) **Zusammenfassung**

Die Erfindung betrifft eine Vorrichtung zum Extrudieren von Profilen, vorzugsweise Kunststoffrohren, die mindestens ein Gehäuse (1), einen Dorn (2) und einen zwischen dem Dorn (2) und dem Gehäuse (1) gebildeten Schmelzekanal (3) aufweist, wobei mindestens das Ende des Schmelzekanals (3) zylindrisch ausgeführt ist.

Erfindungsgemäß ist vorgesehen, dass am Gehäuseausgang (4) eine Art Verlängerung (5) angeordnet ist, die den zylindrischen Schmelzekanal (3) weiterbildet, wobei mindestens der Bereich der Verlängerung (5), der den weitergebildeten Schmelzekanal (6) bildet, aus Material ausgeführt ist, dessen Wärmeleitfähigkeit kleiner als 50 W/(m K), vorzugsweise kleiner als 10 W/(m K) ist.

## Beschreibung

Die Erfindung betrifft eine Vorrichtung zum Extrudieren von Profilen, vorzugsweise Kunststoffrohren, die mindestens ein Gehäuse, einen Dorn und einen zwischen dem Dorn und dem Gehäuse gebildeten Schmelzekanal aufweist, wobei mindestens das Ende des Schmelzekanals zylindrisch ausgeführt ist.

Gattungsgemäße Vorrichtungen sind aus dem Stand der Technik bekannt. So zeigt die **EP 406 226** einen Wendelkopfverteiler für eine Kunststoff-Extrusionseinrichtung mit einem Gehäuse, einem Mundstück mit einer Düse und einem Dorn. Das Mundstück ist separat temperierbar und endet in einem Bereich mit weitgehend parallelen Kanalwänden.

**Aufgabe** der Erfindung ist es, eine Vorrichtung zum Herstellen von Profilen, insbesondere Rohren, anzubieten, mit der im Extrusionsverfahren besonders glatte Oberflächen erzielt werden.

Die **Lösung** der Aufgabe ist dadurch gekennzeichnet, daß am Gehäuseausgang eine Art Verlängerung angeordnet ist, die den zylindrischen Schmelzekanal weiterbildet, wobei mindestens der Bereich der Verlängerung, der den weitergebildeten Schmelzekanal bildet, aus einem Material ausgeführt ist, dessen Wärmeleitfähigkeit kleiner 50 W/(m K), vorzugsweise kleiner als 10 W/(m K) ist. Es ist somit der Einsatz von Edelstählen (~50 W/(m K) möglich, obgleich der Einsatz von Keramik oder Kunststoff bevorzugt wird (Keramik liegt bei 10 W/(m K) und z. B PTFE bei ca. 3 W/(m K)).

Mit dieser Weiterbildung wird erreicht, daß je nach Rezeptur der Kunststoffmasse Ablagerungen bzw. der sogenannte Stick-and-Slip-Effekt vermieden werden. Die schlechte Wärmeleitfähigkeit bewirkt, daß sich nach kurzer Zeit auf der gesamten vom Kunststoff berührten Fläche eine gleichmäßige Oberflächentemperatur einstellt. Dies ist Voraussetzung für einen gleichmäßigen und konstanten Fluß der Kunststoffschmelze. Gute Gleiteigenschaften des eingesetzten Materiales bewirken, daß es zu keinen Ablagerungen (Bartbildung) kommt.

Weiterbildungsgemäß ist vorgesehen, daß der weitergebildete Schmelzekanal sich in die gleiche Richtung wie das zylindrische Ende des Schmelzekanals im Gehäuse erstreckt. Dies ist aber nicht zwingend notwendig, es ist ebenso denkbar, dass sich der weitergebildete Schmelzekanal eben nicht in die gleiche Richtung wie der Schmelzkanal im Gehäuse erstreckt. Gleichermaßen ist es möglich, den Querschnitt des weitergebildeten Schmelzekanals im Verlauf zu verändern. Somit kann sowohl der Durchmesser als auch die Wandstärke des zu produzierenden Kunststoffprofiles, hier wird insbesondere an Rohre gedacht, an die Kundenwünsche angepasst werden. Besonders vorteilhaft ist es, daß die Verlängerung an bereits vorhandenen Gehäusen nachgerüstet werden kann.

Fortbildungsgemäß ist vorgesehen, daß die Verlängerung im Bereich des weitergebildeten Schmelzekanals beschichtet oder komplett aus einem Material ausgeführt ist. Vorzugsweise wird hier als Material Kunststoff z. B. PTFE genutzt. Denkbar ist es auch, den Bereich des Schmelzekanals als Kunststoffeinsatz auszuführen, der in der Verlängerung integriert ist.

Die vorgeschlagene Vorrichtung eignet sich insbesondere zur Herstellung von Rohren aus Polymeren, wobei an ungefüllte oder gefüllte Polymere gedacht ist. Als Füllung sind ebenso Mineralien wie Papier, Holzfasern oder andere biologische Massen möglich. Beispielsweise wird hier an Stroh, Kokosfasern, Reisschalen etc. gedacht.

In den Zeichnungen sind schematisch drei Ausführungsbeispiele aufgeführt, in denen
- Fig. 1: eine erste Variante der Verlängerung und
- Fig. 2: ein Detail aus Figur 1 zeigt, und
- Fig.3: und
- Fig. 4: je eine weitere Variante darstellen.

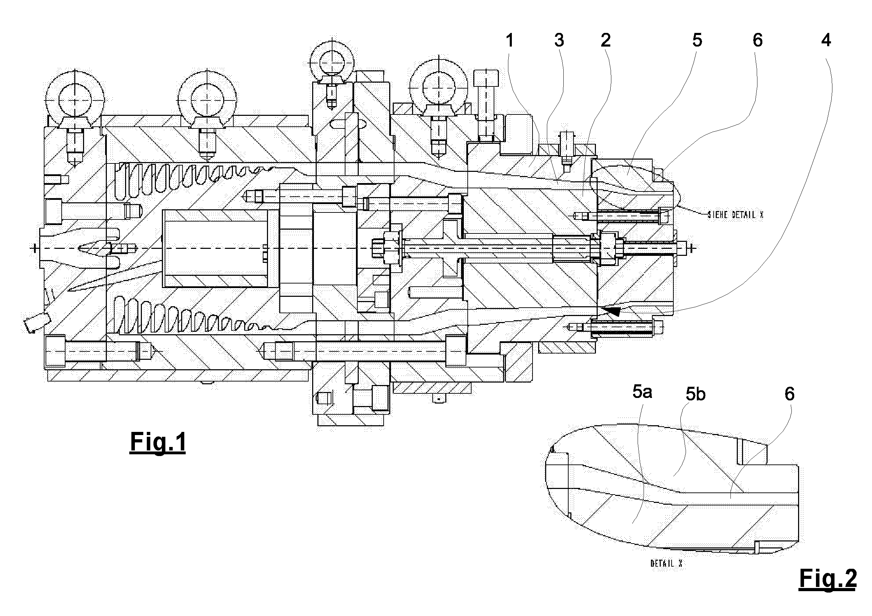

In Figur 1 ist eine Vorrichtung zum Extrudieren von Profilen im Schnitt dargestellt, im rechten Teil der Figur wird ein Gehäuse 1 mit einem Dorn 2 sowie ein zwischen dem Gehäuse 1 und dem Dorn 2 gebildeten Schmelzekanal 3 gezeigt. Das Ende dieses Schmelzekanals 3 ist zylindrisch ausgeführt. Im Anschluß an dieses Ende, also am Gehäuseausgang 4, ist eine Art Verlängerung 5 angebracht, die den Schmelzekanal 3 weiterbildet. Der weitergebildete Schmelzekanal 6 ist sowohl im Querschnitt als auch im Durchmesser verkleinert.

Figur 2 ist ein Ausschnitt der Figur 1, der ein Detail X vergrößert wiedergibt. Hier wird der weitergebildete Schmelzekanal 6 verdeutlicht, der durch den inneren Kern 5a und den Außenteil 5b der Verlängerung 5 gebildet wird.

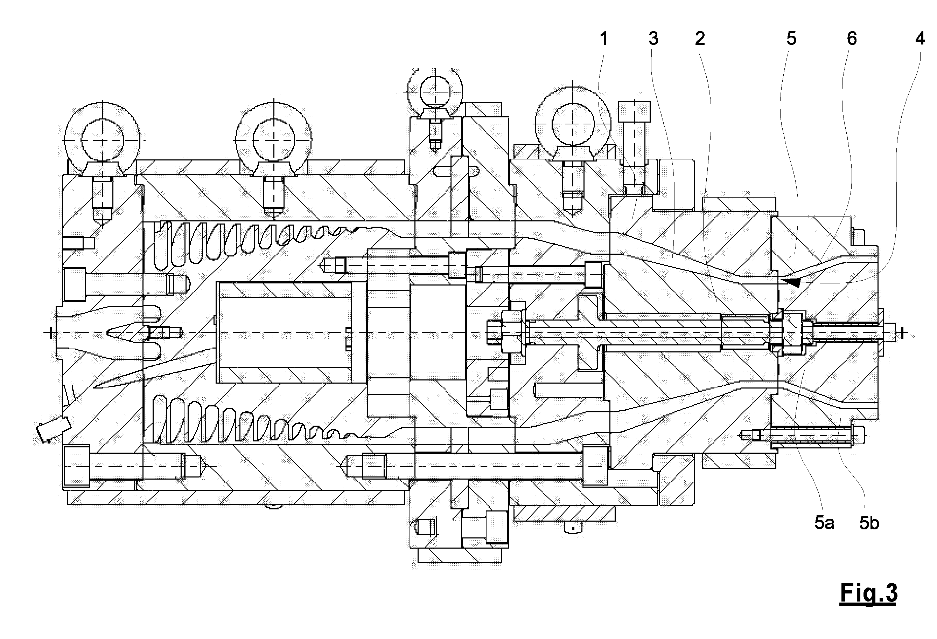

Das Ausführungsbeispiel gemäß Figur 3 entspricht im wesentlichen dem der Figur 1, hier wird jedoch der Durchmesser vergrößert und der Querschnitt des Schmelzekanals im wesentlichen konstant gehalten.

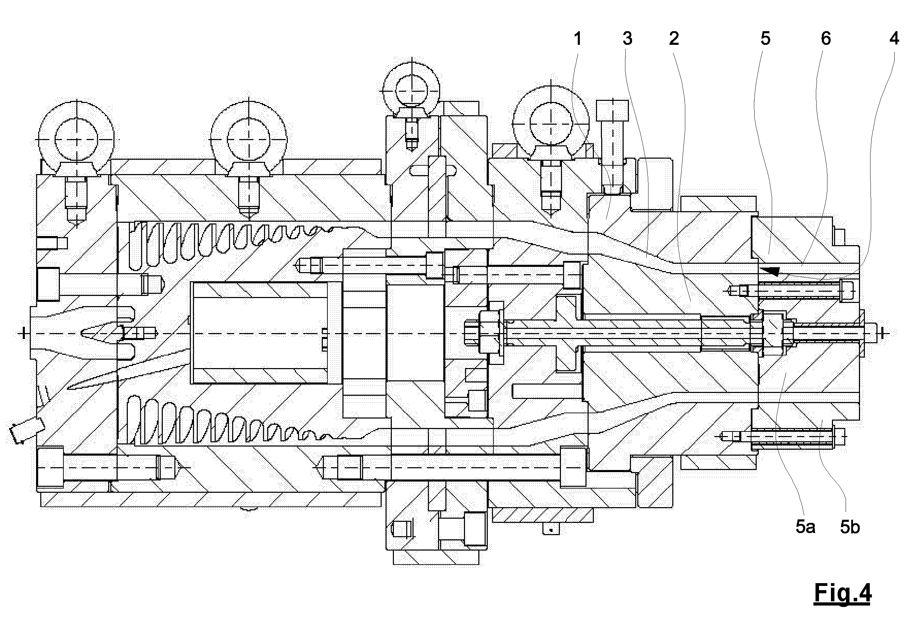

Im Ausführungsbeispiel gemäß Figur 4 wird quasi der Schmelzekanal 3 unverändert weitergeführt. Der weitergeführte Schmelzekanal 6 hat folglich einen weitgehend identischen Querschnitt und Durchmesser wie der Schmelezekanal 3 mit den Vorteilen der gleitfähigen Verlängerung.

Es sei nochmals darauf hingewiesen, dass in allen dargestellten Fällen das Ende des Schmelzekanals 3 zylindrisch ausgeführt ist.

In allen dargestellten Variationen ist die Verlängerung 5 zweistückig und aus einem Material, nämlich Kunststoff, ausgeführt und aus einem Innenkern 5a und einem Außenteil 5b gebildet. Es ist aber auch denkbar, nur den Bereich, der den weitergebildeten Schmelzekanal 6 bildet, aus Kunststoff auszuführen und als Einsatz in die Verlängerung 4 einzubinden, folglich würde dann die Verlängerung mindestens vierteilig ausgeführt sein.

### Bezugszeichenliste:

- 1: Gehäuse
- 2: Dorn
- 3: Schmelzekanal
- 4: Gehäuseausgang
- 5: Verlängerung
- 5a: innerer Kern von 5
- 5b: Außenteil von 5
- 6: weitergebildeter Schmelzekanal in 5

## Patentansprüche

1. Vorrichtung zum Extrudieren von Profilen, vorzugsweise Kunststoffrohren, die mindestens
ein Gehäuse (1),
einen Dorn (2) und
einen zwischen dem Dorn (2) und dem Gehäuse (1) gebildeten Schmelzekanal (3) aufweist,
wobei mindestens das Ende des Schmelzekanals (3) zylindrisch ausgeführt ist,
**dadurch gekennzeichnet, dass**
am Gehäuseausgang (4) eine Art Verlängerung (5) angeordnet ist, die den zylindrischen Schmelzekanal (3) weiterbildet,
wobei mindestens der Bereich der Verlängerung (5), der den weitergebildeten Schmelzekanal (6) bildet, aus Material ausgeführt ist, dessen Wärmeleitfähigkeit kleiner als 50 W/(m K), vorzugsweise kleiner als 10 W/(m K) ist.

2. Vorrichtung nach Anspruch 1, **dadurch gekennzeichnet, dass** der weitergebildete Schmelzekanal (7) sich in die gleiche Richtung wie das zylindrische Ende des Schmelzekanals (3) im Gehäuse (1) erstreckt.

3. Vorrichtung nach Anspruch 1, **dadurch gekennzeichnet, dass** der weitergebildete Schmelzekanal (6) sich nicht in die gleiche Richtung wie der Schmelzekanal (3) im Gehäuse (1) erstreckt.

4. Vorrichtung nach Anspruch 2 oder 3, **dadurch gekennzeichnet, dass** der weitergebildete Schmelzekanal (6) den gleichen oder im Verlauf einen veränderten Querschnitt wie der Querschnitt des Schmelzekanals (3) aufweist.

5. Vorrichtung nach mindestens einem der vorigen Ansprüche, **dadurch gekennzeichnet, dass** die Verlängerung (5) an bereits vorhandenen Gehäusen nachrüstbar ist.

6. Vorrichtung nach einem der vorigen Ansprüche, **dadurch gekennzeichnet, dass** die Verlängerung (5) im Bereich des weitergebildeten Schmelzekanals (3) beschichtet ist.

7. Vorrichtung nach einem der vorigen Ansprüche, **dadurch gekennzeichnet, dass** die Verlängerung aus ein und demselben Material hergestellt ist.

8. Vorrichtung nach mindestens einem der vorigen Ansprüche, **dadurch gekennzeichnet, dass** die Verlängerung aus Kunststoff ausgeführt ist.

9. Vorrichtung nach Anspruch 8, **dadurch gekennzeichnet, dass** der gewählte Kunststoff PTFE ist.
